Europäisches Patentamt

**European Patent Office**

Office européen des brevets

(19)

(11) Publication number: **0 120 209**
**B1**

(12) EUROPEAN PATENT SPECIFICATION

(45) Date of publication of patent specification: **31.05.89**

(51) Int. Cl.⁴: **H 02 H 7/08, H 02 H 1/00**

(21) Application number: **84100733.9**

(22) Date of filing: **25.01.84**

(54) Method of detecting frequency in power system.

(30) Priority: **23.03.83 JP 49741/83**

(43) Date of publication of application:
**03.10.84 Bulletin 84/40**

(45) Publication of the grant of the patent:
**31.05.89 Bulletin 89/22**

(84) Designated Contracting States:
**CH DE GB LI**

(56) References cited:
**EP-A-0 105 077**
**DE-A-2 228 715**
**DE-A-2 261 407**
**DE-A-2 808 616**

**PATENTS ABSTRACT OF JAPAN, no, 17, 6th
February 1978, page 11010 E 77; & JP - A - 52
135 030 (MITSUBISHI DENKI K.K.) 11-11-1977**

(73) Proprietor: **MITSUBISHI DENKI KABUSHIKI
KAISHA**
**2-3, Marunouchi 2-chome Chiyoda-ku
Tokyo 100 (JP)**

(72) Inventor: **Takata, Nobuharu c/o Mutsubishi
Denki K.K.**
**Power Ind. Sys. Center 1-2, Wadasakicho 1-
chome
Hyogo-ku Kobe-shi Hyogo (JP)**

(74) Representative: **Eisenführ & Speiser
Martinistrasse 24
D-2800 Bremen 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a method of fault detection in a variable-voltage and variable-frequency electric power system in which the voltage-to-frequency ratio is controlled to a predetermined value, and in which a correcting signal derived from the frequency of the system is provided to a fault protection means for correcting the sensitivity thereof in accordance with the frequency of the system.

Such a method is known from EP—Al—0105077 which is a document falling under the terms of Article 54(3) EPC. The subject matter described here is related to the subject matter of European Patent Application 84103022.4 (EP—Al—0123129) having the same priority date and filed by the same Applicant.

In variable-voltage and variable-frequency (VVVF) power systems for driving a load such as an AC motor by the use of a VVVF power supply, the ratio between the voltage applied to the load and the frequency thereof is maintained at a predetermined value for the purpose of preventing over-excitation of the load (DE—A—28 08 616).

If in such a system a one-phase ground fault occur during the frequency of the power supplied to the load is being lowered, a protective relay incorporated to protect the system fails to respond to the ground fault since the input thereto is below its operation level. Such a problem may be solved by correcting the input or the sensibility of the relay in accordance with the frequency of the power system, and the frequency could be detected from a voltage generated by, for example, a pilot generator connected to an AC motor. In this arrangement, however, it is required that the pilot generator be connected to the AC motor via mechanical coupling means. Consequently, in the case of connecting the pilot generator to the existing AC motor, an additional toil for modifying the installation is needed and thereby brings about disadvantages with regard to required labor and cost.

An object of the present invention is to provide an improved method which is capable of detecting the frequency of a VVVF power supply at reduced cost, regardless of whether the power system is a new installation or an existing one.

In order to accomplish the above object the method as stated above is characterized in that the correcting signal is derived by detecting an interphase voltage between the power supply lines of the system by means of a voltage detector.

A preferable improvement over the method according to the invention is characterized by further detecting if the line currents of the system have exceeded a predetermined value, for inhibiting the operation of said voltage detector.

The foregoing and other objects and advantages of the present invention are apparent from the following detailed description of specific illustrative embodiments thereof, presented hereinbelow in conjunction with the accompanying drawings, in which:

Fig. 1 is a block diagram of an exemplary embodiment arranged to carry out the detection method of the invention; and

Fig. 2 is a block diagram of another embodiment for carrying out the method of the invention.

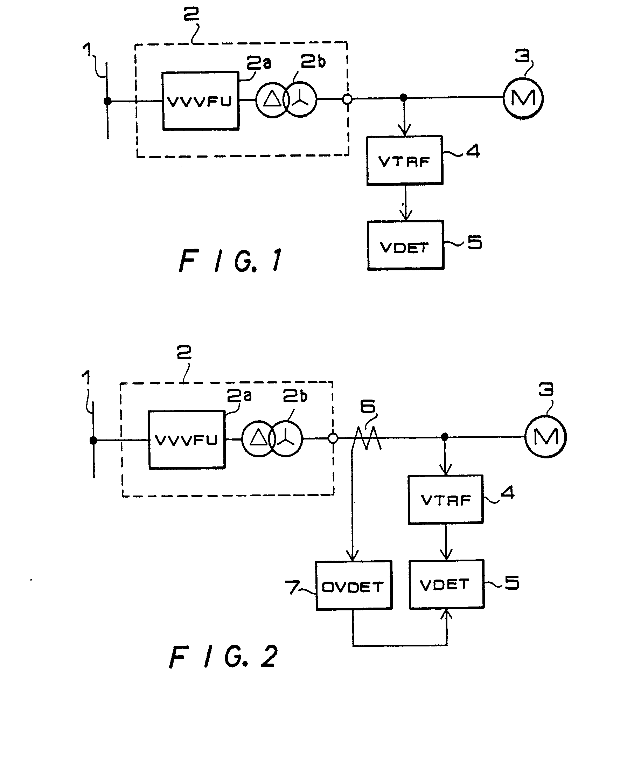

Referring now to Fig. 1 showing the block diagram implementing the method of the invention, there are provided a power source 1 and a VVVF power supply 2 which includes a power unit 2a (VVVFU) and an output transformer 2b having delta-Y connection coupled to an AC motor (M) 3. Also provision is made with a voltage transformer (VTRF) 4 which detects the interphase voltage VΔ between the lines of the system at the input terminal of the motor 3. The interphase voltage VΔ from the transformer 4 is then introduced to a voltage detector (VDET) 5.

In the VVVF system of this type where the system voltage is proportional to the system frequency f, the interphase voltage VΔ introduced to the voltage detector 5 preserves a predetermined ratio to the system frequency f. Accordingly, the detector 5 produces a detection output having proportional value to the voltage VΔ, i.e. the system frequency.

In case that the neutral point of the system is grounded through high resistance or not grounded, the interphase voltage VΔ is substantially the same as that of the normal operating state of the system irrespective of the occurrence of a one-phase ground fault in the system, so that an input to a one-phase ground-fault protection relay (not shown) can be corrected either directly or via a voltage level converter (not shown) with the interphase voltage VΔ from the voltage detector 5.

In the case of a two-phase ground fault where interphase voltages are unbalanced, it is preferable in practice to detect the respective interphase voltages of the lines.

In the block diagram of Fig. 2 showing another exemplary embodiment of the invention, a current transformer 6 is provided to the power supply lines connected to the motor 3, which has an output fed to an overcurrent detector (OVDET) 7. When the current of at least one phase exceeds a predetermined value, the overcurrent detector 7 produces a high-level output singal to inhibit the operation of the detector 5 for preventing erroneous detection at the occurrence of a short-circuit fault.

## Claims

1. A method of fault detection in a variable-voltage and variable-frequency electric power system in which the voltage-to-frequency ratio is controlled to a predetermined value, and in which a correcting signal derived from the frequency of the system is provided to a fault protection means for correcting the input or sensitivity thereof in accordance with the frequency of the system, the.

correcting signal being derived by detecting an interphase voltage between power supply lines of the system by means of a voltage detector (5).

2. The method as defined in claim 1, characterized by further detecting if the line currents of the system have exceeded a predetermined value, for inhibiting the operation of said voltage detector (5).

**Patentansprüche**

1. Verfahren zur Erkennung von Fehlern in einem elektrischen Stromversorgungssystem mit variabler Spannung und variabler Frequenz, wobei das Spannungs-Frequenz-Verhältnis auf einem vorbestimmten Wert gehalten wird, bei dem aus der Frequenz des Systems ein Korrektursignal abgeleitet und das Eingangssignal oder die Eingangsempfindlichkeit einer Fehlerschutzvorrichtung abhängig von der Frequenz des Systems korrigiert wird, und bei dem das Korrektursignal aus einer Zwischenphasenspannung zwischen den Stromversorgungsleitungen des Systems mittels eines Spannungsdetektors (5) abgeleitet wird.

2. Verfahren nach Anspruch 1, dadurch gekennzeichnet, daß außerdem festgestellt wird, ob die Leitungsströme des Systems einen vorbestimmten Wert überschritten haben, um dann das Ansprechen des Spannungsdetektors (5) zy unterbinden.

**Revendications**

1. Procédé de détection de défauts dans un système d'alimentation électrique à tension variable et fréquence variable, dans lequel le rapport tension/fréquence est réglé à une valuer prédéterminée, et dans lequel un signal correcteur dérivé de la fréquence du système est fourni à un moyen de protection contre les défauts, pour corriger l'entrée ou la sensibilité de ce dernier en fonction de la fréquence du système, le signal correcteur étant obtenu par la détection d'une tension interphase entre les lignes d'alimentation électrique du système, effectuée au moyen d'un détecteur de tension (5).

2. Procédé tel que défini dans la revendication 1, caractérisé en ce qu'il consiste en outre à détecter si les courants de ligne du système ont dépassé une valeur prédéterminée, afin d'interrompre l'action dudit détecteur de tension (5).

F I G. 1

F I G. 2